# EUROPÄISCHE PATENTSCHRIFT

(11) **EP 2 133 613 B1**
(45) Veröffentlichungstag und Bekanntmachung des Hinweises auf die Patenterteilung: **21.11.2012**
(21) Anmeldenummer: 09006894.1
(22) Anmeldetag: 22.05.2009
(51) Int. Cl.: F16L 19/02, F16L 19/028, F16L 25/00, F24J 2/46

(54) **Anschlussverbindung, insbesondere zum Verbinden von Solarkollektoren**
Pipe connection, in particular for connecting solar collectors
Liaison de raccordement, notamment pour la liaison de collecteurs solaires

(30) Priorität: 11.06.2008 DE 102008027843
(43) Veröffentlichungstag der Anmeldung: 16.12.2009
(73) Patentinhaber: Witzenmann GmbH, 75175 Pforzheim (DE)
(72) Erfinder: Abraham, Christoph, 75180 Pforzheim (DE); Gehring, Matthias, 75334 Straubenhardt (DE); Gloss, Andreas, 75223 Niefern-Öschelbronn (DE); Klein, Tobias, 76137 Karlsruhe (DE)
(74) Vertreter: Lemcke, Brommer & Partner

(56) Entgegenhaltungen:
- EP-A2- 1 347 227
- DE-U1- 20 121 607
- DE-U1- 20 209 222
- DE-U1- 29 818 534
- DE-U1-202004 005 579
- FR-A- 367 186
- US-A- 1 573 103
- US-A1- 2005 023 832
- US-A1- 2008 007 049

## Beschreibung

Die vorliegende Erfindung betrifft eine Anschlussverbindung nach dem Oberbegriff des Patentanspruchs 1 zwischen einem ersten und einem zweiten metallischen Rohrleitungselement zum Leiten von Fluiden, insbesondere Wasser, welche jeweils wenigstens einen endständigen Bord aufweisen. Eine derartige Anschlussverbindung ist bekannt aus Dokument US 1,573,103.

Außerdem betrifft die vorliegende Erfindung Verwendungen der erfindungsgemäßen Anschlussverbindung.

Insbesondere bei der Montage von Solarkollektoren zur Warmwassererzeugung auf Hausdächern oder dergleichen ist bekannt, zunächst in einem ersten Arbeitsgang die Solarkollektoren an ihrem Standort zu platzieren und dort zu befestigen und anschließend die fluidtechnischen Verbindungen zwischen den einzelnen Solarkollektoren zu schaffen. Zu diesem Zweck weisen Solarkollektoren Anschlussrohre in Form von Rohrleitungselementen auf, die jedoch regelmäßig nicht direkt, sondern unter Zwischenschaltung eines flexiblen Rohrleitungselements miteinander verbunden werden, um Verspannungen und Beschädigungen, insbesondere aufgrund einer Wärmeausdehnung von in den Solarkollektoren enthaltenen Kupferrohrleitungen, vorzubeugen. Dabei stellen die enormen Temperatur- und Druckbelastungen beim Betrieb einer derartigen Solaranlage hohe Anforderungen an die Dichtigkeit und Dauerhaftigkeit der verwendeten Anschlussverbindungen. Beispielsweise schwanken typische Betriebs- und Umgebungstemperaturen im Falle einer Solaranlage zwischen -20°C und +250°C; außerdem beträgt ein Betriebsdruck, mit welchem das Wärmeträgermedium durch die Solarkollektoren und die entsprechende Rohrleitungen strömt, typischerweise bis zu 10 bar.

Vorbekannte Lösungsansätze, welche zum Schaffen dichter und dauerhafter Anschlussverbindungen in diesem Bereich auf die Verwendung von Hanf oder O-Ringen setzen, besitzen daher entsprechende Nachteile hinsichtlich Dichtigkeit und Lebensdauer.

Außerdem hat sich insbesondere bei der Montage von Solarkollektoren auf Dächern oder an anderen schwer zugänglichen Orten der Einsatz und die Handhabung von Dichtmitteln, wie etwa die angesprochenen O-Ringe, als grundsätzlich nachteilig erwiesen, beispielsweise wenn dem Monteur eine entsprechende Dichtung herunterfällt und verloren geht.

Darüber hinaus stellen die genannten zusätzlichen Dichtmittel auch einen Kostennachteil dar, der sich auf dem zurzeit hart umkämpften Solarmarkt als geschäftshindernd erweist.

Der Erfindung liegt die Aufgabe zugrunde, eine Anschlussverbindung zwischen einem ersten metallischen Rohrleitungselement und einem zweiten metallischen Rohrleitungselement zum Leiten von Fluiden, insbesondere von Wasser, anzugeben, wobei die Rohrleitungselemente jeweils einen endständigen Bord aufweisen. mit der sich auf insbesondere montagetechnisch einfache Weise und bei entsprechenden Kostenvorteilen eine dauerhaft dichte Verbindung der Rohrleitungselemente insbesondere auch unter den extremen Einsatzbedingungen bei Solarkollektoren erreichen lässt.

Die Erfindung löst diese Aufgabe mittels einer Anschlussverbindung mit den Merkmalen des Patentanspruchs 1. Der Patentanspruch 13 schützt Verwendungen der erfindungsgemäßen Anschlussverbindung.

Bevorzugte Weiterbildungen der Erfindung sind jeweils Gegenstand von Unteransprüchen, deren Wortlaut hiermit durch ausdrückliche Bezugnahme in die Beschreibung aufgenommen wird, um unnötige Textwiederholungen zu vermeiden.

Die Erfindung schafft dementsprechend zunächst ein Verbindungselement zum Verbinden eines ersten und eines zweiten metallischen Rohrleitungselements, die jeweils wenigstens einen endständigen Bord aufweisen, mit einem wenigstens zweistückigen Halteteil, welches ein erstes und ein zweites Halteteilelement umfasst, welches dazu ausgebildet ist, die Rohrleitungselemente axial im Bereich der Borde zwischen dem ersten und dem zweiten Halteteilelement zusammenzuhalten, wobei in einem Bordhaltebereich zwischen den Halteteilelementen wenigstens eine vorspringende und in den Bordhaltebereich hineinragende Struktur vorgesehen ist, welche beim Zusammenfügen der Halteteilelemente zum Zusammenhalten der Rohrleitungselemente wenigstens eines der Rohrleitungselemente im Bereich des Bords derart umformt, dass eine metallisch dichtende Anlage über den Umfang des betreffenden Rohrleitungselements an dem anderen Rohrleitungselement oder an wenigstens einem der Halteteilelemente geschaffen ist.

Eine erfindungsgemäße Anschlussverbindung zwischen einem ersten metallischen Rohrleitungselement und einem zweiten metallischen Rohrleitungselement zum Leiten von Fluiden, insbesondere Wasser, die jeweils wenigstens einen endständigen Bord aufweisen, wobei die Borde einander zugewandt sind, ist **dadurch gekennzeichnet, dass** die Rohrleitungselemente mittels eines erfindungsgemäßen Verbindungselements verbunden sind, sodass eine metallisch dichtende Anlage über den Umfang eines Rohrleitungselements an dem anderen Rohrleitungselement bzw. an dem wenigstens einen Halteteilelement geschaffen ist.

Die erfindungsgemäße Verwendung des Verbindungselements betrifft das Verbinden zweier metallischer Rohrleitungselemente bei einem Solarkollektor.

Die erfindungsgemäße Verwendung der Anschlussverbindung betrifft das Verbinden, insbesondere das Hintereinanderschalten von Solarkollektoren.

Ein wesentlicher Aspekt der vorliegenden Erfindung besteht also darin, dass die zu verbindenden metallischen Rohrleitungselemente im Bereich ihrer Borde metallisch dichtend entweder aneinander oder an das wenigstens eine Halteteilelement gepresst werden, zu welchem Zweck das Verbindungselement entsprechend ausgebildet ist. Es besitzt wenigstens zwei Halteteilelemente, von denen wenigstens eines eine vorspringende Struktur aufweist, die in den Bereich zwischen den Halteteilelementen hineinragt. Der Bereich wird vorliegend auch als Bordhaltebereich bezeichnet, da in diesem Bereich die genannten Borde der zu verbindenden Rohrleitungselemente angeordnet bzw. anzuordnen sind. Beim Zusammenfügen der genannten Halteteilelemente zum axialen Zusammenhalten der Rohrleitungselemente sorgt die genannte vorspringende Struktur dafür, dass wenigstens eines der Rohrleitungselemente im Bereich seines Bords derart umgeformt wird, dass eine metallisch dichtende Anlage, insbesondere eine Linienanlage, über den Umfang des betreffenden Rohrleitungselements an dem anderen Rohrleitungselement oder dem wenigstens einen Halteteilelement geschaffen ist. Auf diese Weise kommt das geschaffene Verbindungselement mit einer minimalen Anzahl an Bestandteilen aus, da außer den genannten Halteteilelementen und der vorspringenden Struktur, welche im Zuge einer ersten Weiterbildung des erfindungsgemäßen Verbindungselements einstückig mit dem betreffenden Halteteilelement ausgebildet sein kann, keine weiteren Elemente, wie insbesondere Dichtmittel oder dergleichen, erforderlich sind. Dies vereinfacht zum einen die Montage des erfindungsgemäßen Verbindungselements; andererseits erhöht sich außerdem die Lebensdauer der so geschaffenen Anschlussverbindung.

Anders als bei einer Flachdichtung ist außerdem zum Schaffen der genannten metallisch dichtenden Anlage keine besondere Anforderung an die Ebenheit der Bordbereiche der Rohrleitungselemente zu stellen. Diese können damit grundsätzlich sogar erst auf der Baustelle durch entsprechendes Umlegen der jeweiligen Enden der Rohrleitungselemente hergestellt werden.

Bei den zu verbindenden Rohrleitungselementen kann es sich im Rahmen der vorliegenden Verbindung ohne Beschränkung um ein- oder mehrlagige Metallschläuche oder -bälge oder -rohre (auch teilgewellt) handeln, die insbesondere im Verbindungsbereich ein- oder mehrfache Borde oder Bördel aufweisen können. Auch beliebige Kombinationen der vorstehend aufgeführten Arten von Rohrleitungselementen können verwendet werden.

Um die zum Zusammenhalten der Rohrleitungselemente erforderliche Axialkraft zu erzeugen, sieht eine andere Weiterbildung des erfindungsgemäßen Verbindungselements vor, dass das erste Halteteilelement und das zweite Halteteilelement komplementäre Gewindestrukturen aufweisen und zum axialen Halten der Rohrleitungselemente miteinander verschraubt bzw. verschraubbar sind.

Alternativ kann bei einer Weiterbildung des erfindungsgemäßen Verbindungselements vorgesehen sein, dass zum Erzeugen der axialen Haltekraft äußere Verbindungsmittel, wie Spannringe oder dergleichen, Verwendung finden, welche die Rohrleitungselemente im Bereich der Borde aneinander pressen.

Die vorspringende Struktur, welche beim Zusammenfügen der Halteteilelemente für die Umformung des wenigstens einen Rohrleitungselements sorgt, kann im Zuge einer anderen Weiterbildung des erfindungsgemäßen Verbindungselements einen zum Bordhaltebereich hin spitz zulaufenden Querschnitt aufweisen. Insbesondere kann dieser Querschnitt dreieckförmig ausgebildet sein, ist jedoch keinesfalls auf eine derartige Ausgestaltung beschränkt.

Wie bereits erwähnt, kann die vorspringende Struktur einstückig mit dem betreffenden Halteteilelement, an welchem sie angeordnet ist, ausgebildet sein. Die einstückige Ausbildung hat den Vorteil, dass tatsächlich ein Verbindungselement mit minimaler Teileanzahl realisiert wird.

Grundsätzlich ist es in diesem Zusammenhang möglich, entsprechende vorspringende Strukturen an nur einem der Halteteilelemente oder aber an beiden Halteteilelementen vorzusehen.

Alternativ sind auch Ausgestaltungen des Verbindungselements möglich, bei denen die vorspringende Struktur bzw. die vorspringende Strukturen an separaten Bauteilen angeordnet sind, insbesondere an einem im Wesentlichen innerhalb des Bordhaltebereichs anzuordnenden Ringteil. Das separate Bauteil kann nach Art eines Druckrings in axialer Richtung elastisch vorgespannt sein, um Setzerscheinungen eines Gewindes oder Bords anzugleichen, so dass kein Nachziehen der Verbindung erforderlich ist. Alternativ kann das Ringteil in Umfangsrichtung mehrteilig ausgebildet sein, um ein nachträgliches Anbringen an dem betreffenden Rohrleitungselement zu ermöglichen. Dabei kann das Ringteil mit einem Vorsprung, der seinerseits die genannte vorspringende Struktur aufweist, unmittelbar von außen in einen Balgwellenzwischenraum eines als Balgelement ausgebildeten Rohrleitungselements eingreifen, so dass die Ausbildung eines zusätzlichen Bords nicht erforderlich ist.

Das genannte Ringteil kann optional aus einem anderen Material als die Halteteilelemente ausgebildet sein. Wenn letztere beispielsweise aus Messing oder dergleichen bestehen, bietet sich für das Ringteil eine Ausbildung in Edelstahl an.

Die vorspringende Struktur kann eine definierte Schneidkante und darum angrenzend eine Anschlagstruktur aufweisen, um den Schneidweg der Schneidkante, d. h. deren Eindringen in das umzuformende Leitungselement zu begrenzen. Die vorstehend beschriebene Ausgestaltung ist vorteilhafter Weise mit der weiter oben beschriebenen Ausgestaltung einschließlich des separaten Bauteils mit elastischer Vorspannung zu kombinieren.

Um zu verhindern, dass sich die angestrebte metallische Dichtung bei einem schiefen Zusammenfügen, insbesondere schiefen Verschrauben der Halteteilelemente nicht vollständig ausbildet, sieht eine andere Weiterbildung des erfindungsgemäßen Verbindungselements vor, dass an einem der Halteteilelemente eine zu der vorspringenden Struktur im Wesentlichen komplementäre Ausnehmung vorgesehen ist, welche mit der vorspringenden Struktur zum Schaffen der metallischen Dichtung zusammenwirkt. Mit anderen Worten, die vorspringende Struktur verformt bei dieser Ausgestaltung die Rohrleitungselemente und drückt sie in die genannte komplementäre Ausnehmung hinein, sodass eine Art Klemmverbindung geschaffen ist.

Eine ähnlich wirksame Weiterbildung der erfindungsgemäßen Anschlussverbindung sieht vor, dass an wenigstens einem der Rohrleitungselemente im Bereich des jeweiligen Bords eine zu der vorspringenden Struktur im Wesentlichen komplementäre Ausnehmung vorgesehen ist. Diese Ausnehmung wirkt dann entsprechend mit der vorspringenden Struktur zum Schaffen der metallischen Dichtung zusammen, selbst wenn die Halteteilelemente in axialer Richtung leicht schief zusammengefügt werden.

Die Erfindungsgemäße Materialpaarung umfasst Rohrleitungselemente einerseits aus Edelstahl und andererseits aus Kupfer.

Eines der beiden erstgenannten Halteteilelemente kann in einer nicht zur Erfindung gehörenden Ausführung seinerseits mehrteilig entsprechend der Offenbarung gemäß EP 1 347 227 B1 ausgebildet sein und in diesem Zusammenhang ein weiteres (drittes) Halteteilelement, eine innere axiale Metallhülse und einen mit dieser zusammenwirkenden metallischen Sprengring aufweisen. Durch Einwirken des weiteren Halteteilelements auf die Hülse kann mittels des Sprengrings ein eingesetztes Rohrleitungselement, z. B. ein metallischer Wellschlauch, an seinem Ende gebördelt und metallisch dichtend gegen das genannte eine Halteteilelement gepresst werden. Dieses wirkt dann mit dem anderen der beiden erstgenannten Halteteilelemente zusammen, um durch Umformen auch des anderen Rohrleitungselements auch in diesem Bereich eine metallische Dichtung auszubilden, wie weiter oben beschrieben.

Weitere Eigenschaften und Vorteile der vorliegenden Erfindung ergeben sich aus der nachfolgenden Beschreibung von Ausführungsbeispielen anhand der Zeichnung. Es zeigt:
- Figur 1: einen teilweisen Längsschnitt durch eine erste Ausgestaltung des erfindungsgemäßen Verbindungselements zum Schaffen einer erfindungsgemäßen Anschlussverbindung zwischen einem Metallbalg und einem glattwandigen Rohrelement;
- Figur 2: das Verbindungselement gemäß Figur 1 bei im Wesentlichen geschaffener erfindungsgemäßer Anschlussverbindung;
- Figur 3: einen teilweisen Längsschnitt durch eine andere Ausgestaltung des erfindungsgemäßen Verbindungselements bei im Wesentlichen geschaffener erfindungsgemäßer Anschlussverbindung;
- Figur 4: in einer Darstellung gemäß Figur 1 eine weitere Ausgestaltung des erfindungsgemäßen Verbindungselements;
- Figur 5: in einer Darstellung gemäß Figur 3 noch eine weitere Ausgestaltung des erfindungsgemäßen Verbindungselements;
- Figur 6: eine weitere Ausgestaltung eines Halteteilelements bei einem erfindungsgemäßen Verbindungselement;
- Figur 7: eine weitere Ausgestaltung eines Halteteilelements bei einem erfindungsgemäßen Verbindungselement;
- Figur 8: eine weitere Ausgestaltung eines Halteteilelements bei einem erfindungsgemäßen Verbindungselement;
- Figur 9: einen teilweisen Längsschnitt durch eine im Wesentlichen geschaffene weitere nicht zur Erfindung gehörende Anschlussverbindung;
- Figur 10: einen teilweisen Längsschnitt durch noch eine im Wesentlichen geschaffene weitere nicht zur Erfindung gehörende Anschlussverbindung;
- Figur 11: einen teilweisen Längsschnitt durch noch eine im Wesentlichen geschaffene weitere nicht zur Erfindung gehörende Anschlussvorrichtung;
- Figur 12: in einer Darstellung gemäß Figur 1 eine weitere Ausgestaltung des erfindungsgemäßen Verbindungselements;
- Figur 13: die Verwendung eines erfindungsgemäßen Verbindungselements bzw. einer erfindungsgemäßen Anschlussverbindung zum Verbinden von Solarkollektoren; und
- Figur 14: noch eine weitere Ausgestaltung einer nicht zur Erfindung gehörenden Anschlussverbindung.

In den Figuren stehen gleiche Bezugszeichen für gleiche oder gleichwirkende Elemente.

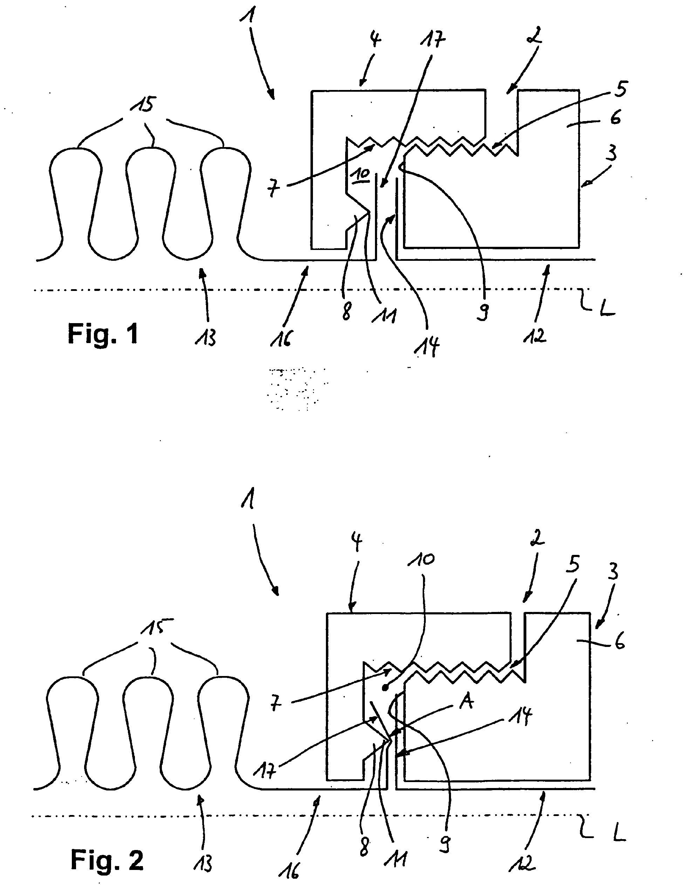

Figur 1 zeigt anhand einer teilweisen Längsschnittansicht eine erste Ausgestaltung der erfindungsgemäßen Anschlussverbindung. Aufgrund der gegebenen Rotationssymmetrie bezüglich der strichpunktiert dargestellten Längsachse L der Anordnung ist in Figur 1 - wie auch in den nachfolgenden Figuren 2 bis 8 - jeweils nur eine Hälfte des Verbindungselements bzw. der Anschlussverbindung dargestellt.

Das Verbindungselement ist in Figur 1 insgesamt mit dem Bezugszeichen 1 bezeichnet. Es umfasst zweistückiges Halteteil 2, welches aus einem ersten Halteteilelement 3 und einem zweiten Halteteilelement 4 gebildet ist. Das erste Halteteilelement 3 weist über einen Teilbereich seiner Außenumfangsfläche ein Außengewinde 5 auf, welches in Axialrichtung seitlich durch einen optionalen Bund 6 begrenzt ist. Das zweite Halteteilelement 4 ist im Wesentlichen nach Art einer Überwurfmutter ausgebildet und weist zu diesem Zweck über einen Teilbereich seiner Innenumfangsfläche ein zu dem Gewinde 5 des ersten Halteteilelements 3 komplementäres Innengewinde 7 auf. Somit ist das zweite Halteteilelement 4 axial auf das erste Halteteilelement 3 aufschraubbar. Dabei darf es mit dem genannten Bund 6 des ersten Halteteilelements 3 jedoch nicht in Anlage treten, da sonst der Anpressdruck begrenzt und die angestrebte Funktion des Verbindungselements nicht gewährleistet wäre (siehe hierzu weiter unten).

Das erste Halteteilelement 3 und das zweite Halteteilelement 4 sind bezüglich der Längsachse L der Anordnung rotationssymmetrisch ausgebildet und weisen jeweils in Richtung der Längsachse L einen zentralen Durchbruch auf, worauf weiter unten noch genauer eingegangen wird.

Das zweite Halteteilelement 4 weist gemäß der Darstellung in Figur 1 einen L-förmigen Querschnitt auf, wobei an dem einen Schenkel des L, welche sich parallel zu der Längsachse L erstreckt, das bereits erwähnte Innengewinde 7 angeordnet ist. Der andere Schenkel des L erstreckt sich gemäß der Darstellung in Figur 1 senkrecht zur Längsachse L der Anordnung und weist an seiner dem ersten Halteteilelement 3 zugewandten Innenseite eine vorspringende, im Querschnitt dreieckförmige Struktur 8 auf. Zwischen dem bereits erwähnten radialen Schenkel des zweiten Halteteilelements 4 und einer diesem zugewandten Stirnseite 9 des ersten Halteteilelements 3 ist ein Bereich 10 definiert, der vorliegend auch als Bordhaltebereich bezeichnet wird, worauf weiter unten noch genauer einzugehen ist.

Wie bereits angesprochen, lässt sich das zweite Halteteilelement 4 auf das erste Halteteilelement 3 aufschrauben, bis die Spitze 11 der vorspringenden Struktur 8 die Stirnfläche 9 des ersten Halteteilelements 3 im Wesentlichen berührt.

Es sei an dieser Stelle noch darauf hingewiesen, dass bei der Ausgestaltung gemäß Figur 1 die vorspringende Struktur 8 einstückig mit dem zweiten Halteteilelement 4, d.h. als integraler Bestandteil des zweiten Halteteilelements 4, ausgebildet ist.

Wie der Figur 1 noch zu entnehmen ist, weisen das erste Halteteilelement 3 und das zweite Halteteilelement 4 bezogen auf die Längsachse L der Anordnung jeweils gleiche (maximale) Außen- und Innendurchmesser sowie Außensechskantgewinde auf, ohne dass die Erfindung hierauf beschränkt wäre.

Das erste Halteteilelement 3 und das zweite Halteteilelement 4 sind vorzugsweise in einem metallischen Werkstoff, insbesondere in Messing, ausgebildet.

Wie der Figur 1 noch zu entnehmen ist, sind zum Schaffen einer erfindungsgemäßen Anschlussverbindung zwei Rohrleitungselemente 12, 13 mit jeweils einem ihrer Enden in den bereits erwähnten Bordhaltebereich 10 des Verbindungselements 1 eingebracht. Bei dem ersten Rohrleitungselement 12 handelt sich um ein im Wesentlichen glattwandiges Rohrelement aus Kupfer, welches sich in Richtung der Längsachse L der Anordnung erstreckt und an seinem dem zweiten Rohrleitungselement 13 zugewandten Ende einen senkrecht zur Längsachse L verlaufenden Bord 14 aufweist. Der Bord 14 verläuft parallel zur Stirnfläche 9 des ersten Halteteilelements 3.

Bei dem zweiten Rohrleitungselement 13 handelt es sich vorliegend um einen Metallbalg aus (Edel-)Stahl, der einen gewellten Abschnitt mit Balgwellen 15 sowie einen glattwandigen Abschnitt 16 aufweist. Der glattwandige Abschnitt 16 weist an seinem freien Ende ebenso wie das erste Rohrleitungselement 12 einen Bord 17 auf, der sich senkrecht zu der Längsachse L und damit parallel zu dem Bord 14 des ersten Rohrleitungselements 12 erstreckt.

Beide Rohrleitungselemente 12, 13 erstrecken sich so durch die bereits erwähnten Durchbrüche in dem ersten Halteteilelement 3 bzw. dem zweiten Halteteilelement 4, dass ihre Borde 14 bzw. 17 parallel zueinander in dem Bordhaltebereich 10 des Verbindungselements 1 angeordnet sind.

Wesentlich für die vorliegende Erfindung ist es nun, dass bei einer Annäherung des ersten Halteteilelements 3 und des zweiten Halteteilelements 4 aufgrund einer Einschraubbewegung die Spitze 11 der vorspringenden Struktur 8 des zweiten Halteteilelements 4 wenigstens das zweite Rohrleitungselement 13 im Bereich seines Bords 17 derart umformt, dass eine metallisch dichtende Anlage über den Umfang des betreffenden Rohrleitungselements 13 an dem anderen Rohrleitungselement 12 geschaffen ist.

Der vorstehend beschriebene Zustand ist im Wesentlichen in der Figur 2 dargestellt, welche die Halteteilelemente 3, 4 in einer weitgehend ineinander eingeschraubten Konfiguration zeigt. Wie bei Bezugszeichen A zu erkennen ist, hat die vorspringende Struktur 8 des zweiten Halteteilelements 4 mit ihrer Spitze 11 den Bord 17 des zweiten Rohrleitungselements 13 derart umgeformt, dass sich in dem genannten Bereich A eine linien- bzw. ringförmige Anlage des Bords 17 des zweiten Rohrleitungselements 13 an dem Bord 14 des ersten Rohrleitungselements 12 ergibt. Insbesondere bei fortgesetztem Verschrauben der beiden Halteteilelemente 3, 4 ergibt sich so im Bereich A eine metallische Dichtung, die auch gehobenen Dichtigkeitsanforderungen entspricht. Auf diese Weise ist mittels des Verbindungselements 1 eine Anschlussverbindung zwischen dem ersten Rohrleitungselement 12 und dem zweiten Rohrleitungselement 13 geschaffen.

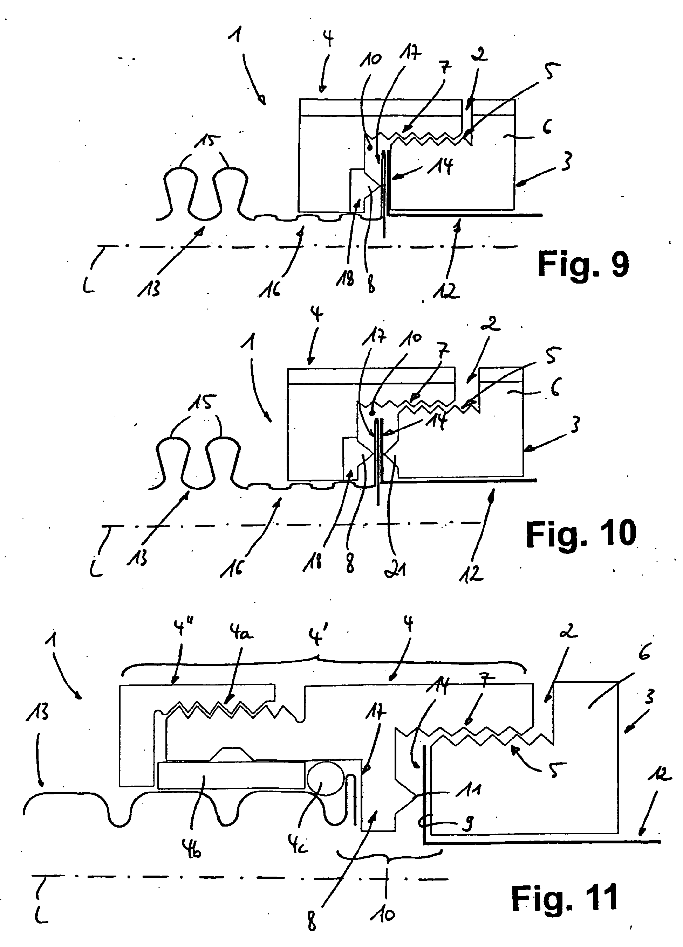

Bei dem ersten Rohrleitungselement 12 kann es sich insbesondere um ein Anschlussrohr eines Solarkollektors handeln, worauf weiter unten insbesondere anhand von Figur 9 noch genauer eingegangen wird. Bei dem zweiten Rohrleitungselement 13 handelt es sich - wie gesagt - vorzugsweise um einen Metallbalg, der entsprechend als flexibles Ausgleichselement insbesondere beim Hintereinanderschalten von Solarkollektoren fungiert.

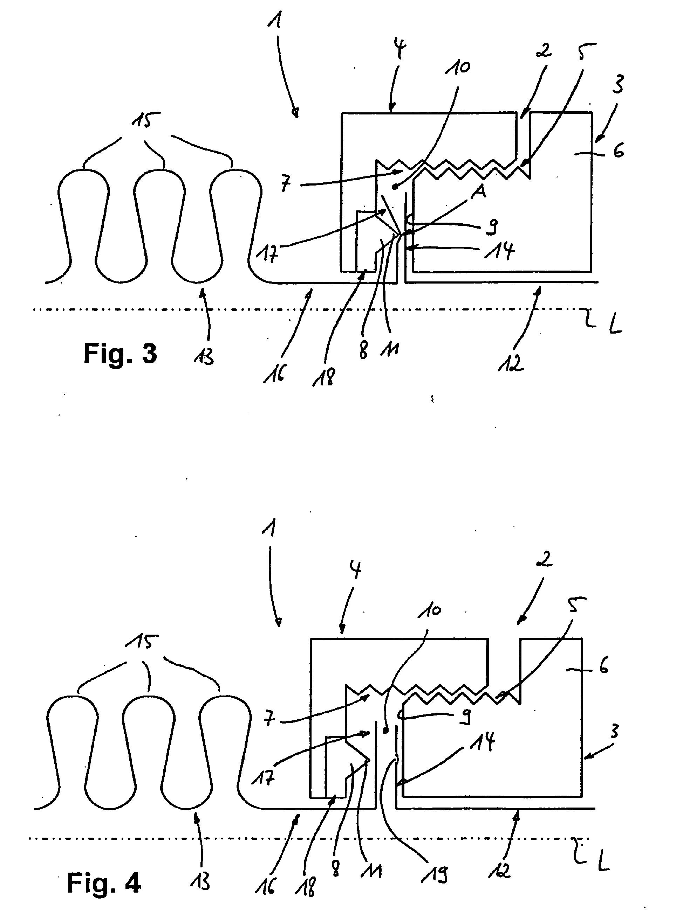

Die Darstellung in Figur 3 entspricht im Wesentlichen derjenigen in Figur 2 mit der Ausnahme, dass die vorspringende Struktur 8, welche mit ihrer Spitze 11 in den Bordhaltebereich 10 des Verbindungselements 1 hineinragt, nicht einstückig mit dem zweiten Halteteilelement 4 ausgebildet ist. Wie man der Figur 3 entnimmt, handelt es sich bei der vorspringenden Struktur 8 in diesem Fall um eine Ausformung eines separaten, ringförmigen Bauteils 18, das in eine entsprechende, nicht näher bezeichnete Ausnehmung des weiter oben erwähnten radialen Schenkels des zweiten Halteteilelements 4 eingesetzt ist. Die Funktion des ringförmigen Bauteils 1 bzw. seiner vorspringenden Struktur 8 entspricht ansonsten vollständig derjenigen, wie sie weiter oben anhand der Figuren 1 und 2 bereits ausführlich beschrieben wurde.

Vorzugsweise ist das ringförmige Bauteil 18 in einem gegenüber dem Material des zweiten Halteteilelements 4 härteren bzw. beständigeren Material ausgebildet. Wenn beispielsweise das zweite Halteteilelement 4 in Messing ausgebildet ist, handelt es sich bei dem Ringteil 18 um ein Element aus Edelstahl. Alternativ können die Teile 4 und 18 jedoch auch aus dem gleichen Werkstoff bestehen.

Figur 4 zeigt eine weitere Ausgestaltung des erfindungsgemäßen Verbindungselements 1 bzw. einer hiermit geschaffenen Anschlussverbindung, wobei wiederum nur auf die wesentlichen Unterschiede zu den bereits beschriebenen Ausgestaltungen näher eingegangen wird.

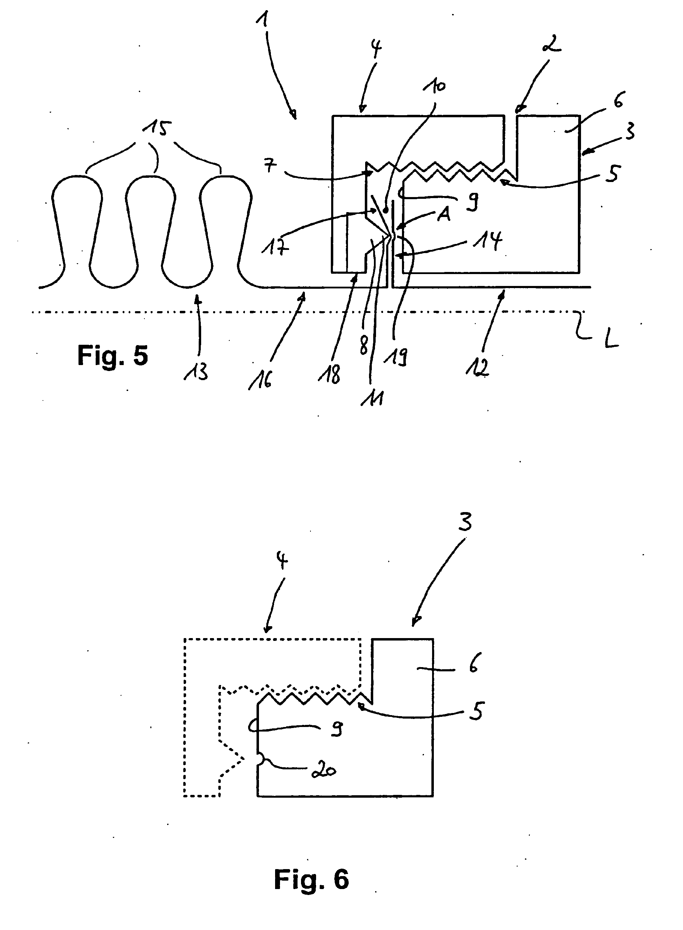

Vom Gegenstand der Figur 4 ist die vorspringende Struktur 8 wiederum Teil eines separaten Bauteils 18, wie weiter oben anhand von Figur 3 beschrieben. Wie der Fachmann jedoch erkennt, ist die Ausgestaltung gemäß Figur 4 (wie auch die nachfolgend zu beschreibende Ausgestaltung gemäß Figur 5) nicht hierauf beschränkt, sodass auch eine einstückige Ausgestaltung gemäß Figur 1 oder Figur 2 realisiert werden kann.

Wie man der Figur 4 leicht entnimmt, ist bei der dort gezeigten Ausgestaltung der Anschlussverbindung an dem ersten Rohrleitungselement 12 im Bereich des Bords 14 eine zu der vorspringenden Struktur 8 bzw. deren Spitze 11 im Wesentlichen komplementäre Ausnehmung 19 nach Art einer umlaufenden Ringnut vorgesehen, in welche hinein der Bord 17 des zweiten Rohrleitungselements 13 durch Einwirken der vorspringenden Struktur 8 umgeformt wird, wie der Figur 5 zu entnehmen ist, welche die Halteteilelemente 3, 4 in ihrem im Wesentlichen ineinander geschraubten Zustand zeigt. Auf diese Weise wird im Bereich A gemäß Figur 5 eine sichere metallische Dichtung auch für den Fall erreicht, dass das zweite Halteteilelement 4 beim Aufschrauben auf das erste Halteteilelement 3 "schief zieht".

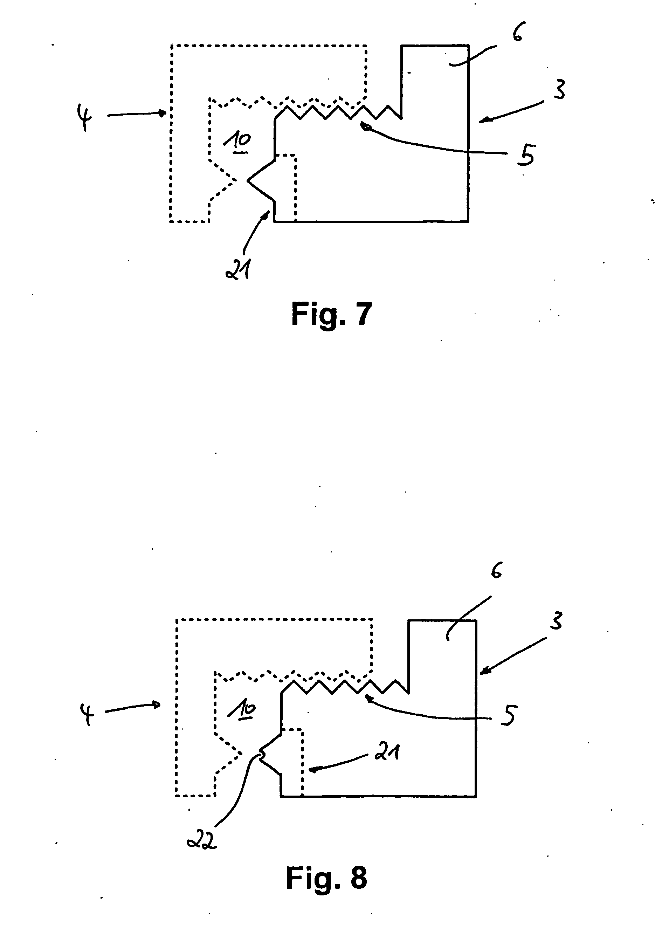

Figur 6 zeigt eine alternative Ausgestaltung des ersten Halteteilelements 3, insbesondere in Bezug auf dessen Stirnfläche 9, welche bei allen vorstehend beschriebenen Ausgestaltungen des Verbindungselements 1 bzw. der damit geschaffenen Anschlussverbindung zum Einsatz kommen kann. Das zweite Halteteilelement ist hier, wie auch in den weiteren Figuren 7 und 8, der Vollständigkeit halber gestrichelt angedeutet.

Abweichend von den bisher gezeigten Ausgestaltungen weist das erste Halteteilelement 3 an seiner Stirnfläche 9 eine Ausnehmung 20 vergleichbar der bereits beschriebenen Ausnehmung 19 an dem ersten Rohrleitungselement 12 gemäß Figur 4 oder Figur 5 auf. Die Ausnehmung 20 wirkt mit der vorspringenden Struktur 8 gemäß einer der Figuren 1 bis 5 zum Schaffen der metallischen Dichtung zusammen und hat somit auch im Wesentlichen die gleiche Funktion wie die Ausnehmung 19 gemäß Figur 4 und Figur 5. Auf diese Weise ergibt sich zwischen den Rohrleitungselementen 12, 13 und dem Verbindungselement 1 im Wesentlichen eine Art Klemmverbindung.

Die Figuren 7 und 8 zeigen weitere, alternative Ausgestaltungen des ersten Halteteilelements 3, die wiederum bei allen Ausgestaltungen gemäß den Figuren 1 bis 5 zum Einsatz kommen können.

Gemäß Figur 7 weist (zusätzlich oder anstelle des zweiten Haltteilelements 4) das erste Halteteilelement 3 an seiner Stirnfläche 9 eine vorspringende und sich in den Bordhaltebereich 10 hinein erstreckende Struktur 21 auf, die ansonsten in ihrer Ausgestaltung gerade der bereits eingehend beschriebenen Struktur 8 an dem zweiten Halteteilelement 4 entspricht.

Wie der Fachmann erkennt, sind auch hier weder die Struktur 8 noch die Struktur 21 auf die exemplarisch gezeigte dreieckförmige Gestalt beschränkt, so lange sie derart in den Bereich 10 hineinragen, dass durch ihr Einwirken auf die Borde 14, 17 die gewünschte metallische Dichtung geschaffen wird.

Wie der Figur 7 noch zu entnehmen ist, kann auch die dort gezeigte Struktur 21 entweder einstückig mit den restlichem Halteteilelement 3 ausgebildet oder als Teil eines diesbezüglich separaten (ringförmigen) Bauteils ausgeführt sein, was in Figur 7 durch eine entsprechende gestrichelte Linie symbolisiert ist.

Figur 8 zeigt eine Alternative zur Ausgestaltung gemäß Figur 7, wobei die Struktur 21 zusätzlich an ihrer Spitze noch eine Ausnehmung 22 aufweist, deren Funktion im Wesentlichen derjenigen der Ausnehmung 19 (vgl. Figur 4 oder Figur 5) bzw. der Ausnehmung 20 (vgl. Figur 6) entspricht.

Wie der Fachmann leicht erkennt, können die Strukturen 21 gemäß Figur 7 oder Figur 8 zusätzlich oder alternativ zu der Struktur 8 gemäß den Figuren 1 bis 5 eingesetzt werden. Es ist demnach im Rahmen der vorliegenden Erfindung auch möglich, das zweite Halteteilelement 4 mit einer glatten, radialen Innenfläche auszubilden, und die vorspringende Struktur gemäß den Figuren 7 oder 8 allein an dem ersten Halteteilelement 3 vorzusehen. Analog zur Darstellung gemäß Figur 6 könnte dann das zweite Halteteilelement 4 an seiner radialen Innenfläche eine entsprechende Ausnehmung 20 aufweisen.

Es sei weiterhin ausdrücklich darauf hingewiesen, dass die Halteteilelemente 3, 4, welche das Halteteil 2 bzw. das Verbindungselement 1 bilden, keinesfalls auf die exemplarisch gezeigte Ausgestaltung mit Innengewinde 7 bzw. Außengewinde 5 beschränkt sind. Die beschriebene Verschraubung ist lediglich eine Möglichkeit, die Rohrleitungselemente 12, 13 im Bereich der Borde 14 bzw. 17 axial zusammenzuhalten, indem in diesem Bereich eine axial wirkende Haltekraft erzeugt wird. Alternative Ausgestaltungen, bei denen die genannte axiale Haltekraft durch Verrasten, Verklipsen, Verspannen, Verkleben oder dergleichen der Halteteilelemente 3, 4 erzeugt wird, liegen ebenfalls im Bereich der vorliegenden Erfindung.

Das weitere nicht zur Erfindung gehörende Ausführungsbeispiel gemäß Figur 9 entspricht im Wesentlichen demjenigen in Figur 3, so dass vorliegend nur auf einige Besonderheiten näher einzugehen ist.

Wie man der Darstellung in Figur 9 leicht entnimmt, weist das zweite Rohrleitungselement 13 im Bereich 16 eine noch vorhandene aber deutlich geringere Wellung als im Bereich der Wellenberge 15 auf. Das zweite Rohrleitungselement, vorliegend also der Wellschlauch 13 weist im Bereich des Bords 17 einen einfachen Bördel auf, was fertigungstechnisch wesentlich einfacher zu realisieren ist, als die weiter oben beschriebenen Ausgestaltungen gemäß den Figuren 1 bis 5.

Wie der Fachmann erkennt, ist die vorliegende Erfindung jedoch keinesfalls auf das Vorliegen eines einfachen Bördels gemäß der Figur 9 ,beschränkt. Vielmehr kann insbesondere das zweite Ringleitungselement 13 an seinem betreffenden Ende grundsätzlich auch beliebige mehrlagige Bördel aufweisen.

Die weitere nicht zur Erfindung gehörende Ausgestaltung gemäß Figur 10 entspricht im Wesentlichen einer Kombination der Ausgestaltungen gemäß Figur 9 und Figur 7, wobei auch das erste Halteteilelement 3 eine vorspringende Struktur 21 aufweist, so dass auch die Ausgestaltung gemäß Figur 10 vorliegend nicht weiter einzugehen ist.

Figur 11 zeigt eine weitere nicht zur Erfindung gehörende Ausgestaltung der im Wesentlichen geschaffenen Anschlussverbindung, bei der das zweite Halteteilelement mehrteilig ausgebildet ist. Dieses mehrteilige Halteteilelement ist in Figur 11 mit dem Bezugszeichen 4' bezeichnet. Es umfasst das weiter oben mehrfach ausführlich beschriebene zweite Halteteilelement 4 sowie ein weiteres Halteteilelement 4", welches mit dem zweiten Halteteilelement 4 über eine komplementäre Gewindeanordnung 4a verbindbar ist. Weiterhin umfasst das mehrteilige Halteteilelement 4' noch eine radial innerhalb des zweiten Halteteilelements 4 angeordnete Metallhülse 4b sowie einen axial benachbart zu der Metallhülse 4b angeordneten metallischen Sprengring 4c.

Soweit bisher beschrieben, ist dieses mehrteilige Halteteilelement 4' aus der EP 1 347 227 B1 der Anmelderin bekannt, auf die entsprechend Bezug genommen wird, um an dieser Stelle unnötige Textwiederholungen zu vermeiden.

Beim Verschrauben der Halteteilelemente 4, 4" wirkt letzteres über die Hülse 4b auf den Sprengring 4c ein, welcher aus seiner in Figur 11 gezeigten Stellung herausgedrückt wird und das Ende eines eingesetzten Rohrleitungselements 13, vorliegend eines metallischen Wellschlauchs, im Bereich von dessen endständigem Bord 17 bördelt, so dass es zu einer metallisch dichtenden Anlage des Bords 17 an der in den erweiterten Bordhaltebereich 10 gemäß Figur 11 hineinragenden vorspringenden Struktur 8 kommt. Die vorspringende Struktur 8 wirkt dann wiederum mit ihrer Spitze 11 beim Zusammenfügen des ersten Halteteilelements 3 und des eigentlichen zweiten Halteteilelements 4 auf das andere, erste Rohrleitungselement 12 ein, formt dieses um - wie beschrieben - und sorgt so für eine metallisch dichtende Anlage des umgeformten ersten Rohrleitungselements 12 an dem ersten Halteteilelement 3 im Bereich von dessen Stirnseite 9.

Wie der Fachmann erkennt, kann natürlich das zweite Halteteilelement 4 im Bereich der vorspringenden Struktur 8 bzw. deren Spitze alternativ auch gemäß beispielsweise Figur 3 ausgebildet sein. Gleiches gilt für die Stirnseite 9 des ersten Halteteilelements 3, beispielsweise unter Bezugnahme auf eine der Figuren 6 bis 8.

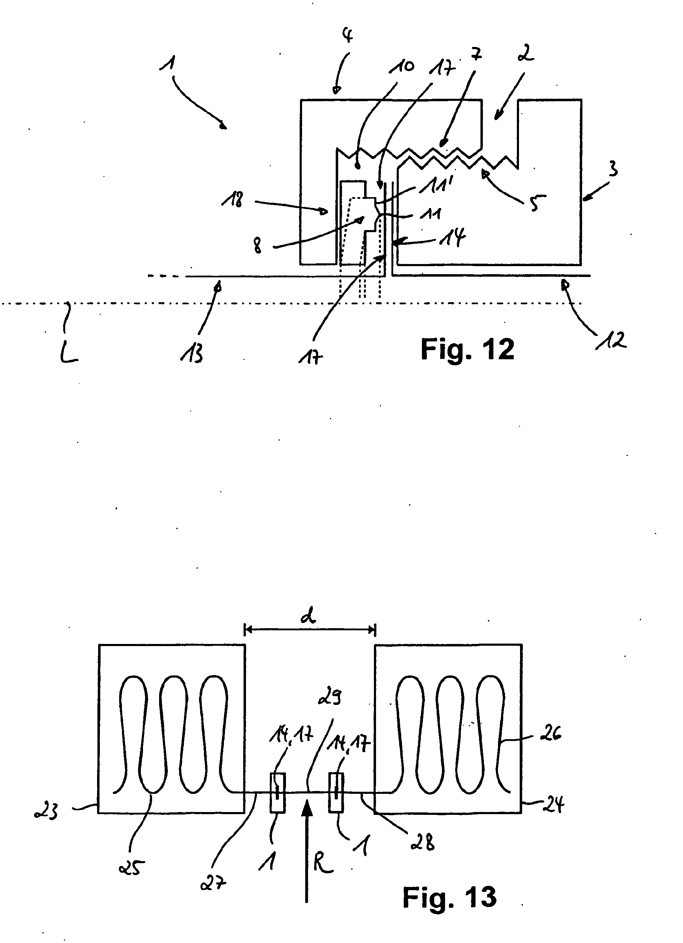

Figur 12 zeigt eine weitere Ausgestaltung des erfindungsgemäßen Verbindungselements 1, welches grundsätzlich zunächst der Ausgestaltung in Figur 3 oder Figur 4 entspricht, das heißt ein separates Bauteil 18 aufweist, an welchem die vorspringende Struktur 8 mit Spitze 11 vorgesehen ist.

Abweichend beispielsweise von den Ausgestaltungen in Figur 3 und Figur 4 weist das zweite Halteteilelement 4 gemäß Figur 12 jedoch keine Ausnehmung auf, in welcher das separate Bauteil oder Ringteil 18 aufgenommen ist. Darüber hinaus weist die vorspringende Struktur 8 des Ringteils 18 neben der bereits erwähnten Spitze oder Schneidkante 11 noch eine um die Spitze 11 herum angeordnete Anschlagstruktur bzw. einen entsprechenden Anschlagbereich 11' auf, welcher als gegenüber der Spitze 11 zurückspringende, ebene Fläche ausgebildet ist.

Bei einer Umformeinwirkung des Ringteils 18 auf den Bord 17 des Rohrleitungselements 13 mittels der Spitze oder Schneidkante 11 dient der Anschlagbereich 11' als Schneidwegbegrenzer, indem er ein tieferes Eindringen der Spitze 11 in das umzuformende Material verhindert, sobald er mit diesem in Anlage tritt. Auf diese Weise ergibt sich eine definierte, begrenzte Schneidwirkung der Spitze oder Schneidkante 11.

Wie der Fachmann in Figur 12 weiterhin entnimmt, kann das Ringteil 18 gemäß der dort eingetragenen, im Wesentlichen vertikal verlaufenden gestrichelten Linien als Federring ausgebildet sein, der beim Zusammenfügen der ersten und zweiten Halteteilelemente 3, 4 durch seine axial wirksame elastische Vorspannung dafür sorgt, dass Setzerscheinungen des Gewindes 5, 7 und der Borde 14, 17 ausgeglichen werden, so dass kein Nachziehen der einmal geschaffenen Anschlussverbindung erforderlich ist.

Die in Figur 12 gezeigte Kombination aus Schneidwegbegrenzung mittels des Anschlagsbereichs 11' und elastischer Federvorspannung ist optional; selbstverständlich kann im Rahmen der vorliegenden Erfindung auch nur eines der beiden Merkmale unabhängig von dem jeweils anderen realisiert werden.

Abschließend zeigt Figur 13 eine bevorzugte Verwendung des erfindungsgemäßen Verbindungselements 1 bzw. der hiermit geschaffenen Anschlussverbindung zum Verbinden von Solarkollektoren.

In Figur 13 sind exemplarisch zwei Solarkollektoren 23, 24 gezeigt, die hintereinander geschaltet und entsprechend fluidtechnisch miteinander verbunden sind. Selbstverständlich ist die Erfindung aber nicht auf diese Anzahl beschränkt, sondern kann auch bei einer größeren Anzahl von Solarkollektoren oder sogar bei lediglich einem Solarkollektor zum Einsatz kommen. In den Solarkollektoren 23, 24 sind mäanderförmige Rohrleitungen 25 bzw. 26, insbesondere aus Kupfer, angeordnet. Diese münden jeweils in wenigstens ein Anschlussrohr 27 bzw. 28, vorzugsweise ebenfalls aus Kupfer, welches aus dem betreffenden Solarkollektor 23 bzw. 24 herausgeführt ist. Bezogen auf die Ausgestaltungen gemäß den Figuren 1 bis 5 oder 9 bis 12 entsprechen die Anschlussrohre 27, 28 gemäß Figur 13 gerade dem dortigen ersten Rohrleitungselement 12.

Um Verspannungen, insbesondere aufgrund von Wärmeausdehnung beim Betrieb der Solarkollektoren 23, 24 entgegenzuwirken, sind diese bzw. deren Anschlussrohre 27, 28 mittels eines flexiblen Leitungselements 29 fluidtechnisch verbunden, wobei das flexible Leitungselement 29 in Figur 13 gerade dem zweiten Rohrleitungselement 13 gemäß den Figuren 1 bis 5 oder 9 bis 12 entspricht. Die Anschlussrohre 27, 28 und das flexible Leitungselement 29 überbrücken den Abstand d zwischen den Solarkollektoren 23, 24, wobei dieser in Figur 13 bezogen auf die Abmessungen der Solarkollektoren 23, 24 stark übertrieben dargestellt ist.

Tatsächlich ist es in der Praxis oft so, dass zunächst die Solarkollektoren 23, 24 ohne das flexible Leitungselement 29 an ihrem Einsatzortmontiert werden, beispielsweise auf einem Dach. Anschließend wird im Rahmen der vorliegenden Erfindung das flexible Leitungselement 29 vorzugsweise von der Seite oder radial in den Bereich zwischen den Anschlussrohren 27, 28 eingebracht und dort mittels jeweils eines erfindungsgemäßen Verbindungselements 1 metallisch dichtend angeschlossen.

Der genannte radiale Einbau des flexiblen Leitungselements 29 ist in Figur 13 durch einen Pfeil R symbolisiert, welcher die Bewegung des flexiblen Leitungselements 29 beim Einbauen angibt. Eine derartige Einbaubewegung R ist besonders dann vorteilhaft, wenn der Abstand d zwischen den Solarkollektoren 23, 24 sehr klein ist, was insbesondere dann der Fall ist, wenn die Solarkollektoren 23, 24 im Bereich ihrer oberen Kollektorflächen breiter als an ihrer Basis ausgebildet sind, sodass die Anschlussrohre 27, 28 abweichend von der Darstellung in Figur 13 sogar teilweise unter der Kollektoroberfläche versteckt angeordnet sein können, sodass allein die angesprochene seitliche Montage des flexiblen Leitungselements 29 in Betracht kommt.

Bei Verwendung der beschriebenen Verbindungselemente 1 müssen in diesem Zusammenhang vorteilhafterweise keinerlei Dichtmittel oder Hilfswerkzeuge zum Schaffen einer fluidtechnisch dichten Verbindung zwischen den Solarkollektoren 23, 24 verwendet werden, was insbesondere bei der Montagearbeit auf einem Dach eine entscheidende Verbesserung darstellt.

Die erfindungsgemäß geschaffene metallische Dichtung kommt mit einer minimalen Teileanzahl aus und ist zudem in besonderem Maße geeignet, den bei Solarkollektoren herrschenden Druckverhältnissen von bis zu 10 bar und den auftretenden Temperaturschwankungen zwischen typischerweise -20°C und +250°C dauerhaft zu widerstehen.

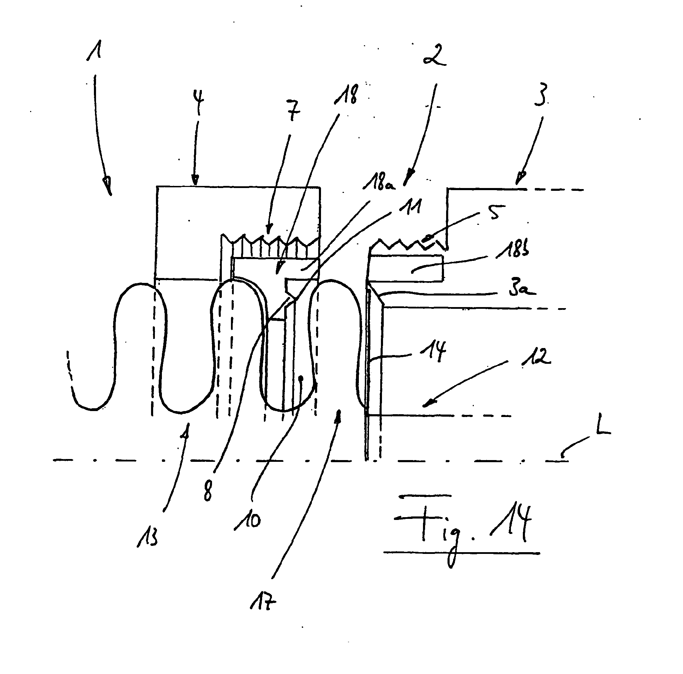

Figur 14 zeigt eine weitere nicht zur Erfindung gehörende Ausgestaltung des Verbindungselements 1. Diese entspricht zunächst grundsätzlich derjenigen in Figur 12, das heißt es ist ein separates Bauteil 18 vorhanden, welches die vorspringende Struktur 8 mit Spitze 11 aufweist.

Allerdings ist das separate Bauteil 18 abweichend von Figur 12 im wesentlichen als in Umfangsrichtung segmentiertes Ringteil ausgebildet, welches im zusammengesetzten Zustand die Balgwellen des als Balg ausgebildeten Ringleitungselements 13 radial außen liegend umfasst. Das genannte Ringteil 18 weißt einen in den Zwischenraum zwischen zwei Balgwellen hineinragenden Vorsprung auf, an welchem die bereits erwähnte vorspringende Struktur 8 mit Spitze 11 angeordnet ist. Dabei fällt auf, dass bei der Ausgestaltung gemäß Figur 14 der genannte Bereich zwischen den Balgwellen zugleich den Bordhaltebereich 10 bildet, so dass nach dem Wortlaut der vorliegenden Erfindung die letzte, endständige Balgwelle des Rohrleitungselements den Bord 17 des Rohrleitungselements 12 bildet.

Eine derartige Ausgestaltung hat den Vorteil, dass das Ringteil 18 und auch das zweite Halteteilelement 4 noch nachträglich bzw. unmittelbar vor dem Verbinden auf das zweite Rohrleitungselement 13 aufgeschoben werden können.

Das Ringteil 18 weist eine gegenüber der Spitze 11 axial vorspringende Ringstruktur 18a auf, welche beim Verbinden der Rohrleitungselemente 12, 13 mit einer entsprechenden komplementären Ausnehmung 18b an dem ersten Halteteilelement 3 zusammenwirkt. Weiterhin weist das erste Halteteilelement 3 im Einwirkbereich der Spitze 11 eine abgeschrägte Anlagefläche 3a für die umzuformenden Abschnitte des ersten bzw. zweiten Rohrleitungselements 12, 13 auf.

## Patentansprüche

1. Anschlussverbindung zwischen einem ersten metallischen Rohrleitungselement (12) und einem zweiten metallischen Rohrleitungselement (13) zum Leiten von Fluiden, insbesondere Wasser, die jeweils wenigstens einen endständigen Bord (14, 17) aufweisen, wobei die Borde (14, 17) einander zugewandt sind, und wobei die Rohrleitungselemente (12, 13) mittels eines Verbindungselements (1) derart verbunden sind, dass im Bereich der Borde (14, 17) eine metallisch dichtende Anlage (A) über den Umfang eines Rohrleitungselements (13) an dem anderen Rohrleitungselement (12) geschaffen ist, welches Verbindungselement (1) ein wenigstens zweistückiges Halteteil (2) aufweist, welches ein erstes (3) und ein zweites Halteteilelement (4) umfasst, und welches dazu ausgebildet ist,
die Rohrleitungselemente (12, 13) axial im Bereich der Borde (14, 17) zwischen dem ersten (3) und dem zweiten Halteteilelement (4) zusammenzuhalten, wobei in einem Bordhaltebereich (10) zwischen den Halteteilelementen (3, 4) wenigstens eine vorspringende und in den Bordhaltebereich (10) hineinragende Struktur (8, 21) vorgesehen ist, welche beim Zusammenfügen der Halteteilelemente (3, 4) zum Zusammenhalten der Rohrleitungselemente (12, 13) wenigstens eines (13) der Rohrleitungselemente im Bereich des Bords (17) derart umformt, dass die metallisch dichtende Anlage (A) über den Umfang des betreffenden Rohrleitungselements (13) an dem anderen Rohrleitungselement (12) geschaffen ist, wobei das erste Rohrleitungselement als Kupferrohr ausgebildet ist und wobei das zweite Rohrleitungselement (13) zumindest an seinem dem ersten Rohrleitungselement (12) zugewandten Ende einen Glattrohrabschnitt (16) aufweist, **dadurch gekennzeichnet, dass** das zweite Rohrleitungselement (13) ein dünnwandiges, flexibles Rohrleitungselement in
Form eines metallischen Wellschlauchs oder Metallbalgs ist wobei das zweite Rohrleitungselement (13) sowie die vorspringende Struktur (8,21) in Edelstahl ausgebildet sind.

2. Anschlussverbindung nach Anspruch 1, **dadurch gekennzeichnet, dass** das erste Rohrleitungselement (12) ein im Wesentlichen glattwandiges Rohrelement ist, insbesondere ein Anschlussrohr (27, 28) eines Solarkollektors (23, 24).

3. Anschlussverbindung nach Anspruch 1 oder 2,
**dadurch gekennzeichnet, dass** an wenigstens einem der Rohrleitungselemente (12, 13) im Bereich des jeweiligen Bords (14, 17) eine zu der vorspringenden Struktur (8, 21) im Wesentlichen komplementäre Ausnehmung (19) vorgesehen ist, welche mit der vorspringenden Struktur (8, 21) zum Schaffen der metallischen Dichtung zusammenwirkt.

4. Anschlussverbindung nach mindestens einem der Ansprüche 1 bis 3, **dadurch gekennzeichnet, dass** das erste Halteteilelement (3) und das zweite Halteteilelement (4) komplementäre Gewindestrukturen aufweisen und zum axialen Halten der Rohrleitungselemente (12, 13) miteinander verschraubbar sind.

5. Anschlussverbindung nach mindestens einem der Ansprüche 1 bis 3, **dadurch gekennzeichnet, dass** das erste Halteteilelement (3) und das zweite Halteteilelement (4) äußere Verbindungsmittel, wie einen Spannring oder dergleichen aufweisen, mittels derer sie zum axialen Halten der Rohrleitungselemente (12, 13) miteinander verbindbar sind.

6. Anschlussverbindung nach mindestens einem der Ansprüche 1 bis 5,
**dadurch gekennzeichnet, dass** die vorspringende Struktur (8, 21) einen zum Bordhaltebereich (10) hin spitz zulaufenden, insbesondere dreieckförmigen Querschnitt aufweist.

7. Anschlussverbindung nach wenigstens einem der Ansprüche 1 bis 6, **dadurch gekennzeichnet, dass** die vorspringende Struktur (8, 21) einstückig mit dem ersten (3) und/oder zweiten Halteteilelement (4) ausgebildet ist.

8. Anschlussverbindung nach wenigstens einem der Ansprüche 1 bis 7, **dadurch gekennzeichnet, dass** die vorspringende Struktur (8, 21) an einem bezüglich des ersten (3) und/oder des zweiten Halteteilelements (4) separaten Bauteil (18), insbesondere einem in dem Bordhaltebereich (10) anzuordnenden Ringteil oder einem in den Bordhaltebereich hineinragenden Vorsprung eines radial außerhalb der Rohrleitungselemente (12, 13) anzuordnenden Ringsteils, angeordnet ist.

9. Anschlussverbindung nach Anspruch 8,
**dadurch gekennzeichnet, dass** das separate Bauteil (18) in axialer Richtung elastisch vorgespannt ist.

10. Anschlussverbindung nach Anspruch 8,
**dadurch gekennzeichnet, dass** das separate Bauteil (18) in Umfangsrichtung mehrteilig, vorzugsweise zweiteilig ausgebildet ist.

11. Anschlussverbindung nach wenigstens einem der Ansprüche 1 bis 10, **dadurch gekennzeichnet, dass** die vorspringende Struktur (8) eine definierte Schneidkante (11) und einen daran angrenzenden Anschlagbereich (11') zur Schneidwegbegrenzung aufweist.

12. Anschlussverbindung nach wenigstens einem der Ansprüche 1 bis 10, **dadurch gekennzeichnet, dass** an einem der Halteteilelemente (3, 4) eine zu der vorspringenden Struktur (8, 21) im Wesentlichen komplementäre Ausnehmung (20, 22) vorgesehen ist, welche mit der vorspringenden Struktur (8, 21) zum Schaffen der metallischen Dichtung zusammenwirkt.

13. Verwendung der Anschtussverbindung nach wenigstens einem der Ansprüche 1 bis 12 zum Verbinden, insbesondere zum Hintereinanderschalten von Solarkollektoren (23, 24).

## Claims

1. Connection between a first metal pipe element (12) and a second metal pipe element (13) for conveying fluids, in particular water, the pipe elements each having at least one end rim (14, 17), wherein the rims (14, 17) are facing one another, and wherein the pipe elements (12, 13) are connected by means of a connecting element (1) in such a way that in the region of the rims (14, 17) a metal sealing abutment (A) is created over the circumference of one pipe element (13) against the other pipe element (12), which connecting element (1) has an at least two-piece retaining part (2) which comprises a first (3) and a second retaining part element (4) and is designed to hold the pipe elements (12, 13) together axially in the region of the rims (14, 17) between the first (3) and the second retaining part elements (4), wherein in a rim retaining region (10) between the retaining part element (3, 4) at least one projecting structure (8, 21) is provided which protrudes into the rim retaining region (10) and which, when the retaining part elements (3, 4) are joined together to hold the pipe elements (12, 13) together, deforms at least one (13) of the pipe elements in the region of the rim (17) in such a way that the metal sealing abutment (A) is created over the circumference of the relevant pipe element (13) against the other pipe element (12), wherein the first pipe element is formed as a copper pipe and wherein the second pipe element (13) has a smooth pipe section (16) at least on its end facing the first pipe element (12), **characterised in that** the second pipe element (13) is a thin-walled flexible pipe element in the form of a metal wool tube or metal bellows wherein the second pipe element (13) and the projecting structure (8, 21) are constructed from stainless steel.

2. Connection as claimed in Claim 1, **characterised in that** the first pipe element (12) is a substantially smooth-walled pipe element, in particular a connecting pipe (27, 28) of a solar collector (23, 24).

3. Connection as claimed in Claims 1 or 2, **characterised in that** on at least one of the pipe elements (12, 13) in the region of the respective rim (14, 17) a recess (19) is provided which is substantially complementary to the projecting structure (8, 21) and co-operates with the projecting structure (8, 21) to create the metal seal.

4. Connection as claimed in at least one of Claims 1 to 3, **characterised in that** the first retaining part element (3) and the second retaining part element (4) have complementary thread structures and can be screwed to one another for axial retention of the pipe elements (12, 13).

5. Connection as claimed in at least one of Claims 1 to 3, **characterised in that** the first retaining part element (3) and the second retaining part element (4) have external connecting means, such as a clamping ring or the like, by means of which they can be connected to one another for axial retention of the pipe elements (12, 13).

6. Connection as claimed in at least one of Claims 1 to 5, **characterised in that** the projecting structure (8, 21) has a cross-section which tapers towards the rim retaining region (10), and in particular is triangular.

7. Connection as claimed in at least one of Claims 1 to 6, **characterised in that** the projecting structure (8, 21) is constructed in one piece with the first (3) and/or the second retaining part element (4).

8. Connection as claimed in at least one of Claims 1 to 7, **characterised in that** the projecting structure (8, 21) is disposed on a component (18) which is separate from the first (3) and/or the second retaining part element (4), in particular an annular part to be disposed in the rim retaining region (10) or a projection which protrudes into the rim retaining region from an annular part to be disposed radially outside the pipe elements (12, 13).

9. Connection as claimed in Claim 8, **characterised in that** the separate component (18) is elastically biased in the axial direction.

10. Connection as claimed in Claim 8, **characterised in that** the separate component (18) is constructed in multiple parts, preferably in two parts, in the circumferential direction.

11. Connection as claimed in at least one of Claims 1 to 10, **characterised in that** the projecting structure (8, 11) has a defmed cutting edge (11) and an abutment region (11') adjoining it to limit the cutting movement.

12. Connection as claimed in Claims 1 or 10, **characterised in that** on one of the retaining part elements (3, 4) a recess (20, 22) is provided which is substantially complementary to the projecting structure (8, 21) and co-operates with the projecting structure (8, 21) to create the metal seal.

13. Use of the connection as claimed in at least one of Claims 1 to 12 for connecting solar collectors (23, 24), in particular connecting them in series.

## Revendications

1. Liaison de raccordement entre un premier élément de conduite métallique (12) et un deuxième élément de conduite métallique (13) destinés à conduire des fluides, en particulier de l'eau, qui présentent chacun au moins une bordure terminale (14, 17), sachant que les bordures (14, 17) sont tournées l'une vers l'autre et sachant que les éléments de conduite (12, 13) sont, au moyen d'un élément de liaison (1), reliés de telle sorte qu'une application métallique étanche (A) de la circonférence d'un élément de conduite (13) contre l'autre élément de conduite (12) est créée dans la région des bordures (14, 17), l'élément de liaison (1) présentant un élément de maintien (2) en au moins deux parties qui comprend un premier (3) et un deuxième (4) éléments partiels de maintien et qui est conçu pour solidariser axialement les éléments de conduite (12, 13) entre le premier (3) et le deuxième (4) éléments partiels de maintien dans la région des bordures (14, 17), sachant qu'au moins une structure en saillie (8, 21) est prévue dans une région de maintien de bordure (10) entre les éléments partiels de maintien (3, 4), structure qui s'enfonce dans la région de maintien de bordure (10) et qui, lorsque les éléments partiels de maintien (3, 4) sont assemblés pour solidariser les éléments de conduite (12, 13), déforme au moins un (13) des éléments de conduite dans la région de la bordure (17) de telle sorte qu'est créée l'application métallique étanche (A) de la circonférence de l'élément de conduite concerné (13) contre l'autre élément de conduite (12), sachant que le premier élément de conduite est réalisé sous forme de tuyau en cuivre et sachant que le deuxième élément de conduite (13) présente, au moins a son extrémité tournée vers le premier élément de conduite (12), un tronçon de tuyau (16) à paroi lisse, **caractérisée en ce que** le deuxième élément de conduite (13) est un élément de conduite flexible à paroi mince sous la forme d'un tuyau souple ondulé ou d'un soufflet métallique, sachant que le deuxième élément de conduite (13) ainsi que la structure en saillie (8, 21) sont réalisés en acier inoxydable.

2. Liaison de raccordement selon la revendication 1, **caractérisée en ce que** le premier élément de conduite (12) est un élément de tuyau essentiellement à paroi lisse, en particulier un tuyau de raccordement (27, 28) d'un collecteur solaire (23, 24).

3. Liaison de raccordement selon la revendication 1 ou 2, **caractérisée en ce qu'**un évidement (19) essentiellement complémentaire de la structure en saillie (8, 21) est prévu sur au moins un des éléments de conduite (12, 13) dans la région de la bordure respective (14, 17), évidement qui coopère avec la structure en saillie (8, 21) pour créer le joint d'étanchéité métallique.

4. Liaison de raccordement selon au moins une des revendications 1 à 3, **caractérisée en ce que** le premier élément partiel de maintien (3) et le deuxième élément partiel de maintien (4) présentent des structures filetées complémentaires et peuvent être mutuellement assemblés par vissage pour le maintien axial des éléments de conduite (12, 13).

5. Liaison de raccordement selon au moins une des revendications 1 à 3, **caractérisée en ce que** le premier élément partiel de maintien (3) et le deuxième élément partiel de maintien (4) présentent des moyens de liaison extérieurs, tels qu'une bague de serrage ou analogues, au moyen desquels ils peuvent être mutuellement assemblés pour le maintien axial des éléments de conduite (12, 13).

6. Liaison de raccordement selon au moins une des revendications 1 à 5, **caractérisée en ce que** la structure en saillie (8, 21) présente une section se terminant en pointe en direction de la région de maintien de bordure (10), en particulier de forme triangulaire.

7. Liaison de raccordement selon au moins une des revendications 1 à 6, **caractérisée en ce que** la structure en saillie (8, 21) est réalisée d'un seul tenant avec le premier (3) et/ou le deuxième (4) éléments partiels de maintien.

8. Liaison de raccordement selon au moins une des revendications 1 à 7, **caractérisée en ce que** la structure en saillie (8, 21) est disposée sur un élément (18) séparé du premier (3) et/ou du deuxième (4) éléments partiels de maintien, en particulier sur un élément annulaire à disposer dans la région de maintien de bordure (10) ou sur une saillie, s'enfonçant dans la région de maintien de bordure, d'un élément annulaire à disposer radialement à l'extérieur des éléments de conduite (12, 13).

9. Liaison de raccordement selon la revendication 8, **caractérisée en ce que** l'élément séparé (18) est précontraint élastiquement en direction axiale.

10. Liaison de raccordement selon la revendication 8, **caractérisée en ce que** l'élément séparé (18) est réalisé en plusieurs parties en direction périphérique, de préférence en deux parties.

11. Liaison de raccordement selon au moins une des revendications 1 à 10, **caractérisée en ce que** la structure en saillie (8) présente une arête de coupe définie (11) et une région de butée adjacente (1 1') pour limiter la course de coupe.

12. Liaison de raccordement selon au moins une des revendications 1 à 10, **caractérisée en ce qu'**un évidement (20, 22) essentiellement complémentaire de la structure en saillie (8, 21) est prévu sur un des éléments partiels de maintien (3, 4), évidement qui coopère avec la structure en saillie (8, 21) pour créer le joint d'étanchéité métallique.

13. Utilisation de la liaison de raccordement selon au moins une des revendications 1 à 12 pour la liaison de collecteurs solaires (23, 24), en particulier pour leur montage en série.
